# EUROPEAN PATENT APPLICATION

(11) **EP 3 778 150 A1**
(43) Date of publication of application: **17.02.2021**
(21) Application number: 19782250.5
(22) Date of filing: 05.04.2019
(51) Int. Cl.: B25J 11/00, B25J 9/16, B25J 19/00, A01D 34/00

(54) **MOBILE ROBOT AND MOBILE ROBOT SYSTEM**

(30) Priority: 06.04.2018 US 201862653567 P
(71) Applicant: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); WOO, Jongjin, Seoul 08592 (KR); KIM, Dongseong, Seoul 08592 (KR); KIM, Hyungsub, Seoul 08592 (KR); SHIN, Seungin, Seoul 08592 (KR); YU, Kyungman, Seoul 08592 (KR); JEONG, Jaehoon, Seoul 08592 (KR); NAM, Dongkyun, Seoul 08592 (KR)
(74) Representative: Ter Meer Steinmeister & Partner
(86) International application number: PCT/KR2019/004052
(87) International publication number: WO 2019/194629

(57) **Abstract**

The present disclosure provides a moving robot includes a body which forms an appearance, a traveler which moves the body, a boundary signal detector which detects a boundary signal generated in a boundary area of a traveling area, and a controller which controls the traveler so that the traveler performs pattern traveling in the traveling area, and when there is obstacle in the traveling area, searches for a non-traveling area due to the obstacle and controls the traveler so that the traveler continuously performs traveling of the non-traveling area. Accordingly, in a case where there is an obstacle in the traveling area when the pattern traveling is performed, continuous traveling is performed by changing a length of the pattern traveling, and thus, it is possible to complete the traveling in the traveling area without stopping the traveling and manually moving the moving robot. Therefore, it is possible to improve battery efficiency and reduce a time of a user and a cost.

## Description

### BACKGROUND OF THE DISCLOSURE

### Field of the disclosure

The present disclosure relates to a moving robot and a moving robot system which performs traveling in a non-traveling area generated by an obstacle in a traveling area when the moving robot performs pattern traveling.

### Related Art

A robot has been developed for industrial use and has been responsible for a portion of factory automation. In recent years, a field of application of the robot has been further expanded, a medical robot, an aerospace robot, or the like has been developed, and a home robot that can be used in a general home is also manufactured. Among these robots, a robot capable of traveling by itself is called a moving robot. A typical example of the moving robot used in an outdoor environment of a home is a lawn mowing robot.

In a case of a moving robot autonomously traveling indoors, a movable area is limited by a wall or furniture, but in a case of a mobile robot autonomously traveling outdoors, there is a need to set a movable area in advance. In addition, there is a need to limit the movable area so that the lawn mowing robot travels in an area where grass is planted.

In the related art (Korean Patent Publication Laid-Open No. 2015-0125508), a wire is buried to set an area in which a lawn mower robot is to be moved, and the lawn mower robot senses a magnetic field formed by a current flowing through the wire and can move within an area set by the wire.

Moreover, according to the related art, a traveling method of performing pattern traveling with one point of a wire as a starting point is disclosed. The pattern traveling is performed on one area a plurality of times, and thus, lawn mowing is subsequently performed.

Meanwhile, in a traveling area which is defined by a boundary wire, at least one obstacle may be defined inside the traveling area.

The obstacle corresponds to a portion which is not divided by a boundary wire due to an installation located in the traveling area subjected to the lawn mowing, an arbitrarily located article, or the like.

Accordingly, an area which cannot be traveled is formed within one traveling area divided by a boundary wire.

The moving robot performs the pattern traveling while checking a boundary according to a signal from each boundary wire. Accordingly, when the moving robot encounter an obstacle, the moving robot performs the lawn mowing on the traveling area except for the obstacle while changing a length of a major axis or a minor axis.

In this regard, according to the related art (United State Patent Publication No. US71553090), a technology of checking a boundary with respect to a traveling area or an area of an obstacle or the like by a marker such as a wire, and thus, performing the pattern traveling is disclosed.

However, in the related art (United State Patent Publication US7155309), both a navigation system and a sensor system must be provided in order to continuously check location information on a position of a current robot in a scanned traveling area in the pattern traveling. However, when the robot does not include the navigation system, information on a current traveling location of the robot cannot be known, and even if the navigation system is provided, an error of absolute location information received from GPS or the like very largely affects the current traveling location of the robot within a narrow space.

Moreover, when the pattern traveling is performed, if the length of the major axis or the minor axis of the pattern traveling is changed by the obstacle, the non-traveling area may be generated on a rear surface of the obstacle.

In particular, when there is no navigation system, it is determined that the moving robot completes the pattern traveling according to the obstacle. Accordingly, even when traveling of the entire traveling area is completed, the moving robot cannot recognize existence of the non-traveling area.

### SUMMARY

A first task of the present disclosure is to determine whether or not there is an obstacle in a traveling area when performing the pattern traveling and perform continuous traveling by changing a length of pattern traveling when there is the obstacle.

A second task of the present disclosure is to perform traveling in a non-traveling area by determining whether or not the non-traveling area generated by the obstacle occurs without absolute location information on a current location.

A third task of the present disclosure is to determine whether or not there is a non-traveling area according to a shape of a traveling area, so that traveling is performed without the non-traveling area as pattern traveling in one traveling area to improve work completion.

A fourth task of the present disclosure is to control traveling so that an area where lawn is not mowed is minimized by performing pattern traveling of non-traveling area according to a size of the obstacle.

According to an aspect of the present disclosure, there is provided a moving robot including: a body which forms an appearance; a traveler which moves the body; a boundary signal detector which detects a boundary signal generated in a boundary area of a traveling area; and a controller which controls the traveler so that the traveler performs pattern traveling in the traveling area, and when there is obstacle in the traveling area, searches for a non-traveling area due to the obstacle and controls the traveler so that the traveler continuously performs traveling of the non-traveling area.

The controller may control the traveler so that the traveler performs the pattern traveling in a zigzag mode in which the traveler alternately travels a major axis and a minor axis.

The controller may detect existence of the obstacle by receiving a detection signal from an obstacle detector which detects the existence of the obstacle.

When a length of the major axis is reduced by the obstacle, the controller may perform the pattern traveling according to the reduced length of the major axis until the obstacle ends.

The controller may move to the non-traveling area when the obstacle ends and perform the pattern traveling on the non-traveling area.

When the obstacle ends, the controller moves along the minor axis by a predetermined distance in a direction opposite to the pattern traveling direction from an end point of the major axis, and reaches an end point of the non-traveling area.

The controller may perform pattern traveling in the non-traveling area in the pattern traveling direction from the end point of the non-traveling area.

The predetermined distance of the controller moving in the opposite direction may be equal to or larger than a sum of a width of the obstacle and a length of the minor axis.

When the pattern traveling in the non-traveling area is completed, the controller may continuously perform pattern traveling on a remaining area of the traveling area.

When the width of the obstacle is smaller than the length of the minor axis, the controller may determine that there is no obstacle.

The controller may detect existence of the obstacle when the length of the major axis is reduced from a first length to a second length.

Meanwhile, according to another aspect of the present disclosure, there is provided a moving robot system including: a boundary wire which defines a traveling area including an obstacle; and a moving robot which includes a body which forms an appearance, a traveler which moves the body, a boundary signal detector which detects a boundary signal generated in a boundary area of a traveling area, and a controller which controls the traveler so that the traveler performs pattern traveling in the traveling area, and when there is obstacle in the traveling area, searches for a non-traveling area due to the obstacle and controls the traveler so that the traveler continuously performs traveling of the non-traveling area.

The controller may control the traveler so that the traveler performs the pattern traveling in a zigzag mode in which the traveler alternately travels a major axis and a minor axis.

When a length of the major axis is reduced by the obstacle, the controller may perform the pattern traveling according to the reduced length of the major axis until the obstacle ends, and the controller may move to the non-traveling area when the obstacle ends and perform the pattern traveling on the non-traveling area.

When the obstacle ends, the controller may move along the minor axis by a predetermined distance in a direction opposite to the pattern traveling direction from an end point of the major axis, and reach an end point of the non-traveling area.

The controller may perform pattern traveling in the non-traveling area in the pattern traveling direction from the end point of the non-traveling area.

### ADVANTAGEOUS EFFECTS

According to the aspects of the present disclosure, in a case where there is an obstacle in the traveling area when the pattern traveling is performed, continuous traveling is performed by changing a length of the pattern traveling, and thus, it is possible to complete the traveling in the traveling area without stopping the traveling and manually moving the moving robot. Therefore, it is possible to improve battery efficiency and reduce a time of a user and a cost.

Moreover, the traveling in the non-traveling area is performed by determining whether or not the non-traveling area generated by the obstacle occurs without receiving absolute location information through GPS or the like, and thus, it is possible to perform the pattern traveling without the non-traveling area in one traveling area, and it is possible to improve a work completion.

Moreover, by performing the pattern traveling of the non-traveling area according to a size of the obstacle, it is possible to minimize an area in which lawn is not mowed, and it is possible to minimize an overlapping lawn mowing area.

### BRIEF DESCRIPTION OF THE DRAWINGS

FIG. 1 is a perspective view of a moving robot of an embodiment of the present disclosure.
FIG. 2 is an elevational view when viewing a front surface of the moving robot 100 of FIG. 1.
FIG. 3 is an elevational view when viewing a right surface of the moving robot 100 of FIG. 1.
FIG. 4 is an elevational view when viewing a bottom surface of the moving robot 100 of FIG. 1.
FIG. 5 is a perspective view of a docking device 200 which docks the moving robot 100 of FIG. 1.
FIG. 6 is an elevational view when the docking device 200 of FIG. 5 is viewed from the front.
FIG. 7a is a view when a reference wire according to an embodiment of the present disclosure is viewed from the rear.
FIG. 7b is a view when the reference wire according to the embodiment of the present disclosure is viewed from one side.
FIG. 8 is a block diagram illustrating a control relationship of the moving robot 100 of FIG. 1.
FIG. 9 is a view of a moving robot system according to an embodiment of the present disclosure.
FIG. 10 is a flowchart of a traveling control method of an embodiment of the moving robot.
FIGS. 11a to 11c are state diagrams illustrating a traveling control of the flowchart of FIG. 10.
FIG. 12 is a flowchart illustrating a traveling control of another embodiment of the moving robot.

### DESCRIPTION OF EXEMPLARY EMBODIMENTS

Expressions referring to directions such as "front(F) / rear(R) / left(Le) / right(Ri) / up (U) / down (D)" mentioned below are defined as indicated in the drawings. However, the expressions are only to explain the present disclosure so that the present disclosure can be clearly understood, and the directions may be differently defined depending on a criterion.

Use of terms "first and second" in front of components mentioned below is only to avoid confusion of the referred component, and is independent of an order, importance, or master/slave relationship between the components. For example, an invention including only a second component without a first component can be implemented.

In the drawings, a thickness or a size of each component is exaggerated, omitted, or schematically illustrated for convenience and clarity of the explanation. The size and area of each component do not entirely reflect the actual size or area.

Moreover, an angle and a direction mentioned in describing a structure of the present disclosure are based on those described in the drawings. In description of a structure in the specification, if a reference point and a positional relationship with respect to the angle are not explicitly mentioned, reference is made to the related drawings.

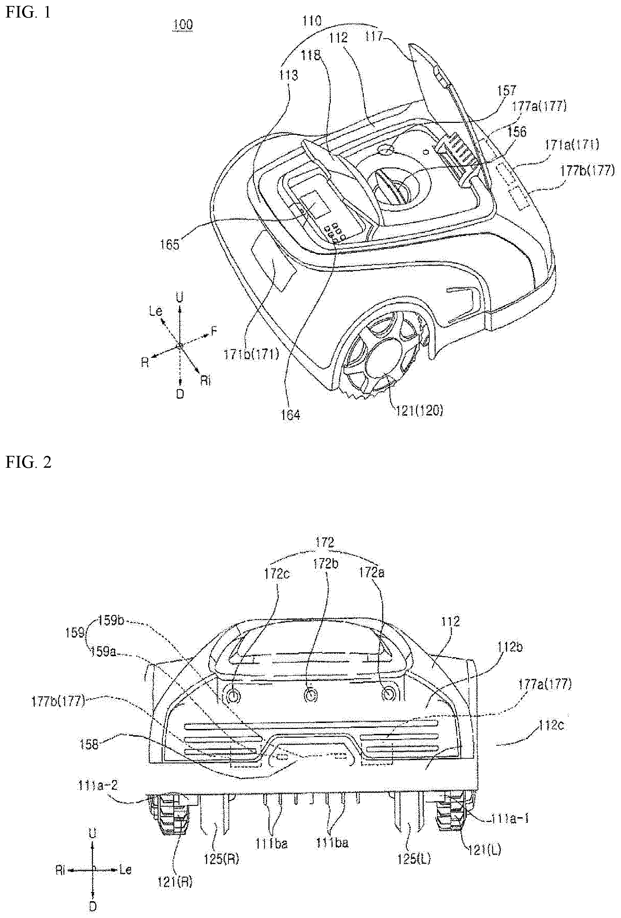

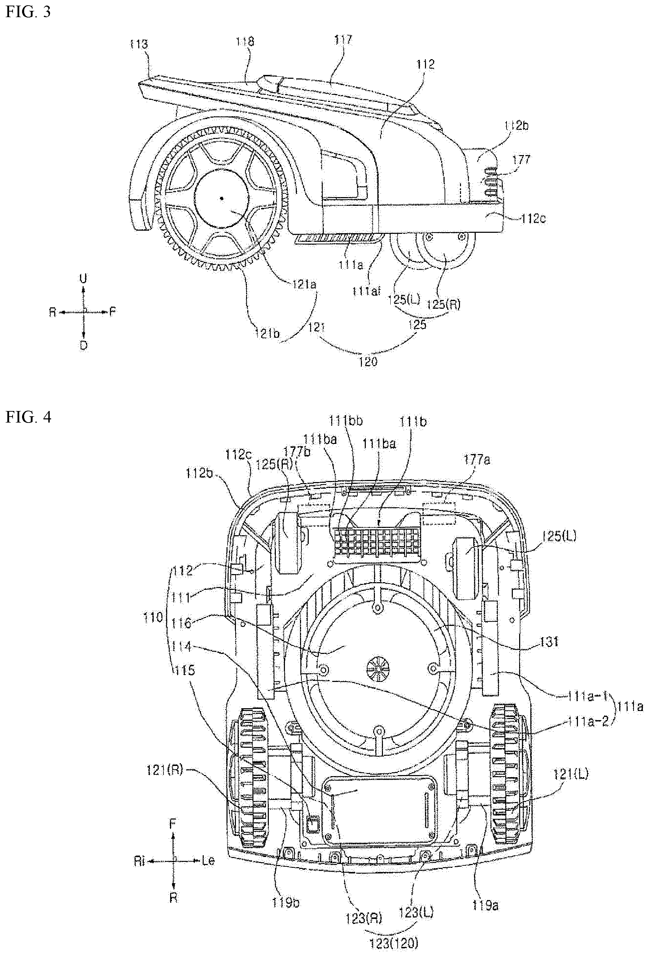

Hereinafter, a lawn mowing robot 100 of moving robots will be described as an example with reference to FIGS. 1 to 6, but the present disclosure is not limited thereto.

Referring to FIGS. 1 to 4, the moving robot 100 includes a body 110 which forms an appearance. The body 110 forms an interior space. The moving robot 100 includes a traveler 120 which moves the body 110 with respect to a traveling surface. The moving robot 100 includes an operator 130 which performs a predetermined work.

The body 110 includes a frame 111 to which the driving motor module 123 to be described later is fixed. A blade motor 132 to be described later is fixed to the frame 111. The frame 111 supports a battery to be described later. The frame 111 provides a skeleton structure which supports various other parts. The frame 111 is supported by an auxiliary wheel 125 and a driving wheel 121.

The body 110 includes a side blocking portion 111a for preventing a finger of a user from entering a blade 131 from both sides of the blade 131. The side blocking portion 111a is fixed to the frame 111. The side blocking portion 111a is disposed to protrude downward compared to a bottom surface of the other portion of the frame 111. The side blocking portion 111a is disposed to cover an upper portion of a space between the driving wheel 121 and the auxiliary wheel 125.

A pair of side blocking portions 111a-1 and 111a-2 are disposed right and left with the blade 131 therebetween. The side blocking portion 111a is disposed to be spaced apart at a predetermined distance from the blade 131.

A front surface 111af of the side blocking portion 111a is formed to be round. The front surface 111af forms a surface which is bent upward to be rounded forward from a bottom surface of the side blocking portion 111a. By using the shape of the front surface 111af, when the moving robot 100 moves forward, the side blocking portion 111a can easily ride over a lower obstacle below a predetermined reference.

The body 110 includes a front blocking portion 111b for preventing the finger of the user from entering the blade 131 in front of the blade 131. The front blocking portion 111b is fixed to the frame 111. The front blocking portion 111b is disposed to cover a portion of an upper portion of a space between the pair of auxiliary wheels 125L and 125R.

The front blocking portion 111b includes a protruding rib 111ba protruding downward compared to a bottom surface of the other portion of the frame 111. The protruding rib 111ba extends in a front-rear direction. An upper end portion of the protruding rib 111ba is fixed to the frame 111, and a lower end portion of the protruding rib 111ba forms a free end.

A plurality of protruding ribs 111ba may be spaced apart in a right-left direction. The plurality of protruding ribs 111ba may be disposed parallel to each other. A gap is formed between two adjacent protruding ribs 111ba.

A front surface of the protruding rib 111ba is formed to be round. The front surface of the protruding rib 111ba forms a surface which is bent upward to be rounded forward from a bottom surface of the protruding rib 111ba. By using the shape of the front surface of the protruding rib 111ba, when the moving robot 100 moves forward, the protruding rib 111ba 111a can easily ride over a lower obstacle below a predetermined reference.

The front blocking portion 111b includes an auxiliary rib 111bb to assist stiffness. The auxiliary rib 111bb for reinforcing stiffness of the front blocking portion 111b is disposed between upper end portions of the two adjacent protruding ribs 111ba. The auxiliary rib 111bb may be formed to protrude downward and extend in a lattice shape.

A caster (not illustrated) for rotatably supporting the auxiliary wheel 125 is disposed on the frame 111. The caster is rotatably disposed with respect to the frame 111. The caster is rotatably provided about a vertical axis. The caster is disposed below the frame 111. A pair of casters corresponding to the pair of auxiliary wheels 125 is provided.

The body 110 includes a case 112 which covers the frame 111 from above. The case 112 forms an upper surface and front/rear/left/right surfaces of the moving robot 100.

The body 110 may include a case connector (not illustrated) which fixes the case 112 to the frame 111. The case 112 may be fixed to an upper end of the case connector. The case connector may be disposed to be movable in the frame 111. The case connector may be disposed to be movable only in an up-down direction with respect to the frame 111. The case connector may be provided to be able to be movable only within a predetermined range. The case connector is movable integrally with the case 112. Accordingly, the case 112 is movable relative to the frame 111.

The body 110 includes a bumper 112b disposed in a front portion thereof. The bumper 112b absorbs an impact when the bumper 112b comes in contact with an external obstacle. In a front surface portion of the bumper 112b, a bumper groove is formed, which is recessed rearward and formed to be elongated in the right-left direction. A plurality of bumper grooves may be disposed spaced apart in the up-down direction. A lower end of the protruding rib 111ba is disposed at a lower position than a lower end of the auxiliary rib 111bb.

In the bumper 112b, a front surface and right and left surfaces are formed to be connected to each other. The front surface and the side surfaces of the bumper 112b are connected to each other to be rounded.

The body 110 may include a bumper auxiliary portion 112c which is disposed to surround an outer surface of the bumper 112b. The bumper auxiliary part 112c is coupled to the bumper 112b. The bumper auxiliary portion 112c surrounds a lower portion and lower portions of right and left sides of a front surface of the bumper 112b. The bumper auxiliary portion 112c may cover the front surface and lower half portions of the right and left sides of the bumper 112b.

A front end surface of the bumper auxiliary portion 112c is disposed in front of a front end surface of the bumper 112b. The bumper auxiliary portion 112c forms a surface protruding from a surface of the bumper 112b.

The bumper auxiliary portion 112c may be formed of a material which is advantageous for shock absorption, such as rubber. The bumper auxiliary part 112c may be formed of a flexible material.

The frame 111 may include a movable fixing portion (not illustrated) to which the bumper 112b is fixed. The movable fixing portion may be disposed to protrude upward from the frame 111. The bumper 112b may be fixed to an upper end portion of the movable fixing portion.

The bumper 112b may be disposed to be movable within a predetermined range with respect to the frame 111. The bumper 112b is fixed to the movable fixing portion and can move integrally with the movable fixing portion.

The movable fixing portion may be disposed to be movable with respect to the frame 111. The movable fixing portion may be provided so that the movable fixing portion is rotatable within a predetermined range with respect to the frame 111 about a virtual rotation axis. Accordingly, the bumper 112b may be rotatably provided integrally with the movable fixing portion with respect to the frame 111.

The body 110 includes a handle 113. The handle 113 may be disposed on a rear side of the case 112.

The body 110 includes a battery input portion 114 through which a battery is taken in or out. The battery input portion 114 may be disposed on a bottom surface of the frame 111. The battery input unit 114 may be disposed on a rear side of the frame 111.

The body 110 includes a power switch 115 for turning on/off power of the moving robot 100. The power switch 115 may be disposed on the bottom surface of the frame 111.

The body 110 includes a blade protector 116 which covers a lower side of a central portion of the blade 131. The blade protector 116 is provided so that a blade of a centrifugal portion of the blade 131 is exposed, but the central portion of the blade 131 is covered.

The body 110 includes a first opening/closing unit 117 which opens and closes a portion where a height adjuster 156 and a height display 157 are disposed. The first opening and closing portion 117 is hinged to the case 112 and is provided to enable opening and closing operations. The first opening/closing portion 117 is disposed on an upper surface of the case 112.

The first opening/closing portion 117 is formed in a plate shape, and covers upper sides of the height adjuster 156 and the height display 157 in a closed state.

The body 110 includes a second opening/closing unit 118 for opening and closing a portion where a display module 165 and an input unit 164 are disposed. The second opening/closing unit 118 is hinged to the case 112 and is provided to enable opening and closing operations. The second opening/closing portion 118 is disposed on the upper surface of the case 112. The second opening/closing unit 118 is disposed behind the first opening/closing unit 117.

The second opening/closing unit 118 is formed in a plate shape, and covers the display module 165 and the input unit 164 in a closed state.

An openable angle of the second opening/closing unit 118 is preset to be smaller than an openable angle of the first opening/closing unit 117. Accordingly, even in an open state of the second opening/closing unit 118, the user can easily open the first opening/closing unit 117, and the user can easily operate the height adjuster 156. In addition, even in the open state of the second opening/closing unit 118, the user can visually check a content of the height display 157.

For example, the openable angle of the first opening/closing unit 117 may be provided to be about 80 to 90° based on the closed state. For example, an openable angle of the second opening/closing unit 118 may be provided to be about 45 to 60° based on the closed state.

In the first opening/closing unit 117, a rear end thereof is raised upward with a front end thereof as a center, and thus, the first opening/closing unit 117 is opened. Moreover, in the second opening/closing unit 118, a rear end thereof is raised upward with a front end thereof as a center, and thus, the second opening/closing unit 118 is opened. Accordingly, the user can open and close the first opening/closing unit 117 and the second opening/closing unit 118 from a rear side of the lawn mowing robot 100, which is a safe area even when the lawn mowing robot 100 moves forward. In addition, the opening operation of the first opening/closing unit 117 and the opening operation of the second opening/closing unit 118 may be prevented from interfering with each other.

The first opening/closing unit 117 may be provided to be rotatable with respect to the case 112, about a rotation axis extending in the right-left direction on the front end of the first opening/closing unit 117. The second opening/closing unit 118 may be provided to be rotatable with respect to the case 112, about a rotation axis extending in a right-left direction on the front end of the second opening/closing unit 118.

The body 110 may include a first motor housing 119a accommodating a first driving motor 123(L) therein, and a second motor housing 119b accommodating the second driving motor 123(R) therein. The first motor housing 119a may be fixed to a left side of the frame 111, and the second motor housing 119b may be fixed to a right side of the frame 111. A right end of the first motor housing 119a is fixed to the frame 111. A left end of the second motor housing 119b is fixed to the frame 111.

The first motor housing 119a is formed in a cylindrical shape forming a height from side to side. The second motor housing 119b is formed in a cylindrical shape forming a height from side to side.

The traveler 120 includes a drive wheel 121 which is rotated by a driving force of the drive motor module 123. The traveler 120 may include at least one pair of drive wheels 121 which is rotated by the driving force of the drive motor module 123. The driving wheel 121 includes a first wheel 121(L) and a second wheels 121(R) provided on the left and right sides so as to be independently rotatable. The first wheel 121(L) is disposed on the left side, and the second wheel 121(R) is disposed on the right side. The first wheel 121(L) and the second wheel 121(R) are spaced apart from side to side. The first wheel 121(L) and the second wheel 121(R) are disposed on a lower rear side of the body 110.

The first wheel 121(L) and the second wheel 121(R) are provided to be rotatable independently so that the body 110 can rotate and move forward with respect to the ground. For example, when the first wheel 121(L) and the second wheel 121(R) rotate at the same rotational speed, the body 110 may move forward with respect to the ground. For example, when the rotational speed of the first wheel 121(L) is faster than the rotational speed of the second wheel 121(R) or when a rotational direction of the first wheel 121(L) and a rotational direction of the second wheel 121(R) are different from each other, the body 110 may rotate with respect to the ground.

The first wheel 121(L) and the second wheel 121(R) may be formed larger than the auxiliary wheel 125. A shaft of the first driving motor 123 (L) may be fixed to a center portion of the first wheel 121(L), and a shaft of the second driving motor 123(R) may be fixed to a center portion of the second wheel 121(R).

The driving wheel 121 includes a wheel outer peripheral portion 121b which is in contact with the ground. For example, the wheel outer portion 121b may be a tire. A plurality of protrusions for increasing a frictional force with the ground may be formed on the wheel outer peripheral portion 121b.

The driving wheel 121 may include a wheel frame (not illustrated) which fixes the wheel outer peripheral portion 121b and receives power from the motor 123. The shaft of the motor 123 is fixed to a center portion of the wheel frame, and thus, a rotational force can be transmitted to the wheel frame. The wheel outer peripheral portion 121b is disposed to surround a periphery of the wheel frame.

The driving wheel 121 includes a wheel cover 121a covering an outer surface of the wheel frame. The wheel cover 121a is disposed in a direction opposite to a direction in which the motor 123 is disposed based on the wheel frame. The wheel cover 121a is disposed at the center portion of the wheel outer peripheral portion 121b.

The traveler 120 includes the driving motor module 123 which generates a driving force. The traveler 120 includes the drive motor module 123 which provides the driving force to the driving wheel 121. The driving motor module 123 includes the first driving motor 123(L) which provides the driving force to the first wheel 121(L), and the second driving motor 123(R) which provides the driving force to the second wheel 121(R). The first driving motor 123(L) and the second driving motor 123(R) may be disposed spaced apart from side to side. The first driving motor 123(L) may be disposed on a left side of the second driving motor 123(R).

The first driving motor 123(L) and the second driving motor 123(R) may be disposed on the lower portion of the body 110. The first driving motor 123(L) and the second driving motor 123(R) may be disposed at the rear portion of the body 110.

The first driving motor 123(L) may be disposed on a right side of the first wheel 121(L), and the second driving motor 123(R) may be disposed on a left side of the second wheel 121(R). The first driving motor 123(L) and the second driving motor 123(R) are fixed to the body 110.

The first driving motor 123 (L) is disposed inside the first motor housing 119a, and the motor shaft may protrude to the left. The second driving motor 123(R) is disposed inside the second motor housing 119b, and the motor shaft may protrude to the right.

In the present embodiment, the first wheel 121(L) and the second wheel 121(R) are directly connected to a rotating shaft of the first driving motor 123(L) and a rotating shaft of the second driving motor 123(R), respectively. However, a component such as a shaft may be connected to the first wheel 121(L) and the second wheel 121(R), a rotational force of the motors 123(L) and 123(R) may be transmitted to the wheels 121a and 120b via a gear or chain.

The traveler 120 may include the auxiliary wheel 125 which supports the body 110 together with the driving wheel 121. The auxiliary wheel 125 may be disposed in front of the blade 131. The auxiliary wheel 125 is a wheel which does not receive the driving force by the motor, and serves to assist the body 110 with respect to the ground. A caster supporting a rotating shaft of the auxiliary wheel 125 is coupled to the frame 111 to be rotatable about a vertical axis. The first auxiliary wheel 125(L) disposed on the left side and the second auxiliary wheel 125(R) disposed on the right side may be provided.

The operator 130 is provided to perform a predetermined work. The operator 130 is disposed on the body 110.

For example, the operator 130 may be provided to perform works such as cleaning or lawn mowing. As another example, the operator 130 may be provided to perform a work such as transporting an object or finding an object. As still another example, the operator 130 may perform a security function for detecting an external intruder or a dangerous situation.

In the present embodiment, the operator 130 is described as performing mowing. However, a type of a work to be performed by the operator 130 may be various, and need not be limited to the example of the description.

The operator 130 may include the blade 131 rotatably provided to mow the lawn. The operator 130 may include a blade motor 132 which provides a rotational force to the blade 131.

The blade 131 is disposed between the driving wheel 121 and the auxiliary wheel 125. The blade 131 is disposed on the lower portion of the body 110. The blade 131 is provided to be exposed from the lower side of the body 110. The blade 131 rotates around a rotation axis extending in an up-down direction to mow the lawn.

The blade motor 132 may be disposed in front of the first wheel 121(L) and the second wheel 121(R). The blade motor 132 is disposed in a lower portion of a central portion in an inner space of the body 110.

The blade motor 132 may be disposed behind the auxiliary wheel 125. The blade motor 132 may be disposed in the lower portion of the body 110. The rotational force of the motor shaft is transmitted to the blade 131 using a structure such as a gear.

The moving robot 100 includes a battery (not illustrated) which supplies power to the driving motor module 123. The battery provides power to the first driving motor 123(L). The battery provides power to the second driving motor 123(R). The battery may supply power to the blade motor 132. The battery may provide power to a controller 190, an azimuth sensor 176, and an output unit 165. The battery may be disposed on a lower side of a rear portion in the inner space of the body 110.

The moving robot 100 is provided to change a height of the blade 131 with respect to the ground, and thus, can change a mowing height of the grass. The moving robot 100 includes the height adjuster 156 for the user to change the height of the blade 131. The height adjuster 156 may include a rotatable dial, and the dial is rotated to change the height of the blade 131.

The moving robot 100 includes the height display 157 which displays a level of the height of the blade 131. When the height of the blade 131 is changed according to an operation of the height adjuster 156, the height level displayed by the height display 157 is also changed. For example, the height display 157 may display a predicted height value of the lawn after the moving robot 100 performs lawn mowing with a current height of the blade 131.

The moving robot 100 includes a docking insertion 158 which is connected to a docking device 200 when the moving robot 100 docks with the docking device 200. The docking insertion 158 is provided to be recessed to be inserted into the docking connector 210 of the docking device 200. The docking insertion 158 is disposed on the front surface portion of the body 110. The moving robot 100 can be correctly guided when being charged by the connection of the docking insertion 158 and the docking connector 210.

The moving robot 100 may include a charging corresponding terminal 159 disposed at a position contactable with a charging terminal 211 to be described later in a state where the docking insertion 158 is inserted into the docking connector 210. The charging corresponding terminal 159 may include a pair of charging corresponding terminals 159a and 159b disposed at positions corresponding to the pair of charging terminals 211 (211a and 211b). The pair of charging correspondence terminals 159a and 159b may be disposed left and right in a state where the docking insertion portion 158 is interposed therebetween.

A terminal cover (not illustrated) may be provided to cover the docking insertion 158 and the pair of charging terminals 211 (211a, 211b) so as to be opened and closed. When the moving robot 100 travels, the terminal cover may cover the docking insertion 158 and the pair of charging terminals 211 (211a and 211b). When the moving robot 100 is connected to the docking device 200, the terminal cover is opened, and the docking insertion 158 and the pair of charging terminals 211 (211a and 211b) may be exposed.

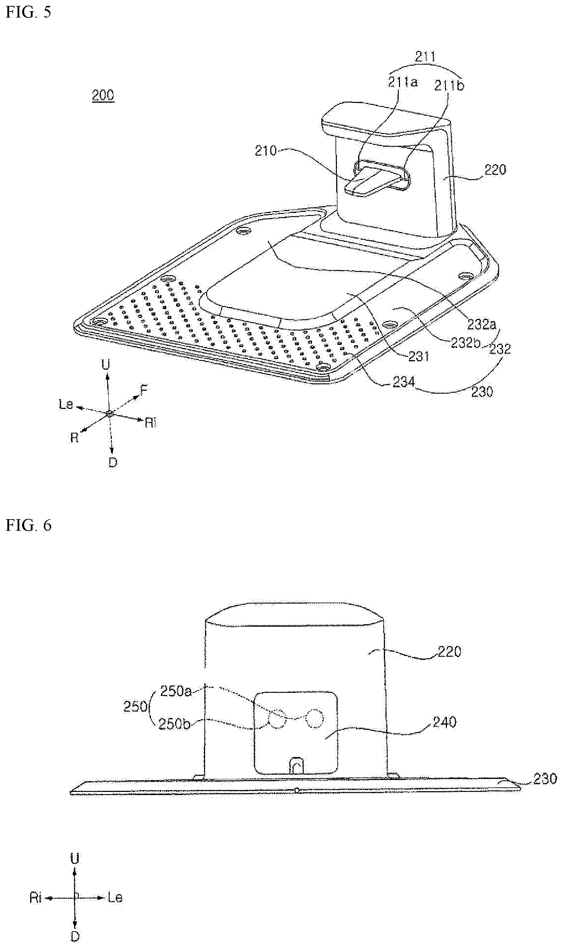

Meanwhile, referring to FIGS. 5 and 6, the docking device 200 includes a docking base 230 disposed on the floor and a docking support 220 protruding upwardly from a front portion of the docking base 230.

The docking base 230 defines a surface parallel in a horizontal direction. The docking base 230 has a plate shape so that the moving robot 100 can be seated. The docking support 220 extends from the docking base 230 in a direction intersecting the horizontal direction.

The moving robot 100 includes the docking connector 210 which is inserted into the docking insertion 158 when the moving robot 100 is charged. The docking connector 210 protrude rearward from the docking support 220.

The docking connector 210 may have a thickness in the up-down direction smaller than a width in the right-left direction. The width of the docking connector 210 in the right-left direction may narrowed rearward. When viewed from above, a shape of the docking connection 210 is trapezoidal in whole. The docking connector 210 is formed in a right and left symmetrical shape. A rear portion of the docking connector 210 forms a free end, and a front portion of the docking connector 210 is fixed to the docking support 220. The rear portion of the docking connector 210 may be formed in a rounded shape.

When the docking connector 210 is completely inserted into the docking insertion 158, the moving robot 100 may be charged by the docking device 200.

The docking device 200 includes the charging terminal 211 for charging the moving robot 100. The charging terminal 211 and the charging corresponding terminal 159 of the moving robot 100 come into contact with each other, and thus, power for charging may be supplied from the docking device 200 to the moving robot 100.

The charging terminal 211 includes a contact surface facing the rear side, and the charging corresponding terminal 159 includes a contact corresponding surface facing the front side. The contact surface of the charging terminal 211 and the contact corresponding surface of the charging corresponding terminal 159 come into contact with each other, and thus, the power of the docking device 200 is connected to the moving robot 100.

The charging terminal 211 may include the pair of charging terminals 211 (211a and 211b) forming positive and negative poles. The first charging terminal 211(211a) is provided to come into contact with the first charging terminal 159a, and the second charging terminal 211(211b) is provided to come into contact with the second charging terminal 159b.

The pair of charging terminals 211(211a and 211b) may be disposed in a state where the docking connector 210 is interposed therebetween. The pair of charging terminals 211(211a and 211b) may be disposed on right and left of the docking connector 210.

The docking base 230 includes a wheel guard 232 on which the driving wheel 121 and the auxiliary wheel 125 of the moving robot 100 ride. The wheel guard 232 includes a first wheel guard 232a which guides a movement of the first auxiliary wheel 125 and a second wheel guard 232b which guides a movement of the second auxiliary wheel 125. An upper convex center base 231 is disposed between the first wheel guard 232a and the second wheel guard 232b. The docking base 230 includes a slip prevention 234 for preventing slipping of the first wheel 121(L) and the second wheel 121(R). The slip prevention 234 may include a plurality of protrusions protruding upward.

Meanwhile, a boundary wire 290 for setting a boundary of a traveling area of the moving robot 100 may be implemented. The boundary wire 290 may generate a predetermined boundary signal. The moving robot 100 may detect a boundary signal and recognize a boundary of the traveling area set by the boundary wire 290.

For example, a predetermined current flows along the boundary wire 290 to generate a magnetic field around the boundary wire 290. Here, the generated magnetic field is a boundary signal. An AC current having a predetermined change pattern may flow through the boundary wire 290 so that the magnetic field generated around the boundary wire 290 may be changed to have a predetermined change pattern. The moving robot 100 can recognize that the moving robot 100 approaches the boundary wire 290 within a predetermined distance using a boundary signal detector 177 which detects the magnetic field, and thus, the moving robot 100 can travel only the traveling area within the boundary set by the boundary wire 290.

The boundary wire 290 may generate a magnetic field in a direction different from a reference wire 270. For example, the boundary wire 290 may be disposed substantially parallel to the horizontal plane. Here, the "substantially parallel" can include parallelism in an engineering sense, including complete parallelism in a mathematical sense and a certain level of error.

The docking device 200 may serve to transmit a predetermined current to the boundary wire 290. The docking device 200 may include a wire terminal 250 connected to the boundary wire 290. Both ends of the boundary wire 290 may be connected to a first wire terminal 250a and a second wire terminal 250b, respectively. When the boundary wire 290 and the wire terminal 250 are connected to each other, the power of the docking device 200 can supply a current to the boundary wire 290.

The wire terminal 250 may be disposed at a front portion F of the docking device 200. That is, the wire terminal 250 may be disposed on a side opposite to a direction in which the docking connector 210 protrudes. The wire terminal 250 may be disposed on the docking support 220. The first wire terminal 250a and the second wire terminal 250b may be disposed spaced apart from side to side.

The docking device 200 may include a wire terminal opening/closing portion 240 which covers the wire terminal 250 so that the wire terminal 250 can be opened or closed. The wire terminal opening/closing portion 240 may be disposed at the front portion F of the docking support 220. The wire terminal opening/closing portion 240 is hinged to the docking support 220 and may be preset to perform an opening/closing operation when the wire terminal opening/closing portion 240 is rotated.

Meanwhile, the reference wire 270 for recognizing the position of the docking device 200 to the moving robot 100 may be implemented. The reference wire 270 may generate a predetermined docking position signal. The moving robot 100 detects the docking position signal, recognizes the position of the docking device 200 by the reference wire 270, and may return to the recognized position of the docking device 200 when a return command or charging is required. The position of the docking device 200 may be a reference point of the traveling of the moving robot 100.

The reference wire 270 is formed of a conductive material through which electricity can flow. The reference wire 270 may be connected to the power supply of the docking device 200 to be described later.

For example, a magnetic field may be generated around the reference wire 270 by causing a predetermined current to flow along the reference wire 270. Here, the generated magnetic field is the docking position signal. By allowing an alternating current having a predetermined change pattern to flow through the reference wire 270, a magnetic field generated around the reference wire 270 may change with a predetermined change pattern. The moving robot 100 can recognize that the moving robot 100 is close to the reference wire 270 within a predetermined distance by using the boundary signal detector 177 which detects the magnetic field, and accordingly, the moving robot 100 can return to the position of the docking device 200 set by the reference wire 270.

The reference wire 270 may generate the magnetic field in a direction distinct from the boundary wire 290. For example, the reference wire 270 may extend in a direction intersecting the horizontal direction. Preferably, the reference wire 270 may extend in the up-down direction orthogonal to the horizontal direction.

The reference wire 270 may be installed on the docking device 200. The reference wire 270 may be disposed at various positions in the docking device 200.

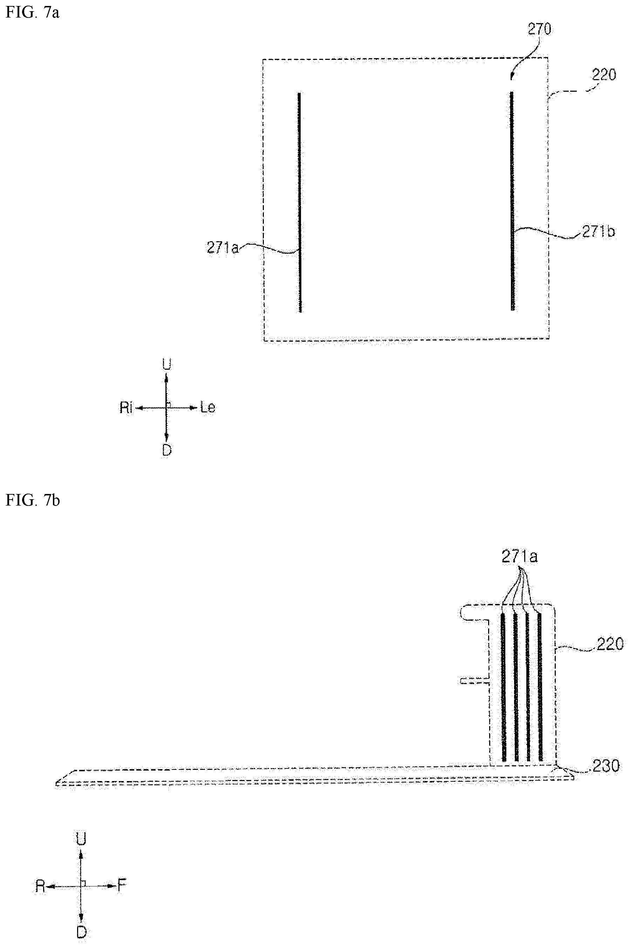

FIG. 7a is a view when the reference wire 270 according to a first embodiment of the present disclosure is viewed from the rear, and FIG. 7b is a view when the reference wire 270 according to the first embodiment of the present disclosure is viewed from one side.

With reference to FIGS. 6, 7a, and 7b, the reference wire 270 according to the first embodiment may be disposed inside the docking support 220. Since the reference wire 270 needs to generate a magnetic field signal in the horizontal direction, the reference wire 270 is disposed to extend in the vertical direction. When the reference wire 270 is disposed on the docking base 230, there is a disadvantage that a thickness of the docking base 230 becomes very thick.

The reference wire 270 may include at least a vertical portion 271 extending in a direction intersecting the horizontal direction. The vertical portion 271 may be disposed substantially in parallel with the up-down direction UD.

A direction of electricity input into the vertical portion 271 of the reference wire 270 may proceed from the top to the bottom or from the bottom to the top.

A plurality of vertical portions 271 may be disposed in order to generate the docking position signal more than a certain level in the entire peripheral area of the docking device 200. For example, the vertical portion 271 may include a first vertical portion 271a and a second vertical portion 271b which is disposed to be spaced apart from the first vertical portion 271a. Of course, the vertical portion 271 may include only one of the first vertical portion 271a and the second vertical portion 271b.

The first vertical portion 271a and the second vertical portion 271b are disposed to be spaced apart in the right-left direction. The first vertical portion 271a may be disposed adjacent to a right end of the docking support 220, and the second vertical portion 271b may be disposed adjacent to a left end of the docking support 220. When the first vertical portion 271a and the second vertical portion 271b are disposed adjacent to both ends of the docking support 220, an area in which the magnetic field is generated by the reference wire 270 is expanded as far as possible around the docking device 200.

The first vertical portion 271a and the second vertical portion 271b may have the same or different directions of current. Preferably, when electricity flows from the top to the bottom in the first vertical portion 271a, electricity may flow in the second vertical portion 271b from the bottom to the top.

In order to reinforce the strength of the electric field of the first vertical portion 271a and the second vertical portion 271b, a plurality of first vertical portions 271a and a plurality of second vertical portions 271b may be provided, respectively. Each of the first vertical portion 271a and the second vertical portion 271b may be an assembly of several wires, and the first vertical portion 271a and the second vertical portion 271b may have a certain arrangement. Of course, one first vertical portion 271a and one second vertical portion 271b may be disposed.

For example, a plurality of first vertical portions 271a may be disposed in a row along a line extending in the front-rear direction, and a plurality of second vertical portions 271b may be disposed in a row along a line extending in the front-rear direction.

When the plurality of first vertical portions 271a and the second vertical portions 271b are disposed at both ends of the docking support 220 in the right-left direction and disposed in rows in the front-rear direction, the charging terminal 211 and the docking connector 210 may be disposed between the plurality of first vertical portions 271a and the second vertical portion 271b. When the charging terminal 211 and the docking connector 210 are disposed between the plurality of first vertical portions 271a and the plurality of second vertical portions 271b, there is an advantage in that the reference wire 270 can be disposed without changing configurations of the charging terminal 211 and the docking connector 210.

The plurality of first vertical portions 271a and the plurality of second vertical portions 271b may be electrically connected to each other or may receive electricity from a separate power source. The docking device 200 may serve to send a predetermined current to the reference wire 270. The docking device 200 may include the wire terminal 250 connected to the reference wire 270. Both ends of the reference wire 270 may be connected to the first wire terminal 250a and the second wire terminal 250b, respectively. Through the connection between the reference wire 270 and the wire terminal 250, the power of the docking device 200 may supply current to the reference wire 270.

Specifically, both ends of the plurality of first vertical portions 271a may be connected to the first wire terminal 250a and the second wire terminal 250b, respectively, and both ends of the plurality of second vertical portions 271b may be connected to the first wire terminal 250a and the second wire terminal 250b, respectively.

Of course, the reference wire 270 according to another example may further include a horizontal portion (not illustrated). In this case, the reference wire 270 may have a structure in which the first vertical portion 271a and the second vertical portion 271b are connected to each other to receive power from one power source.

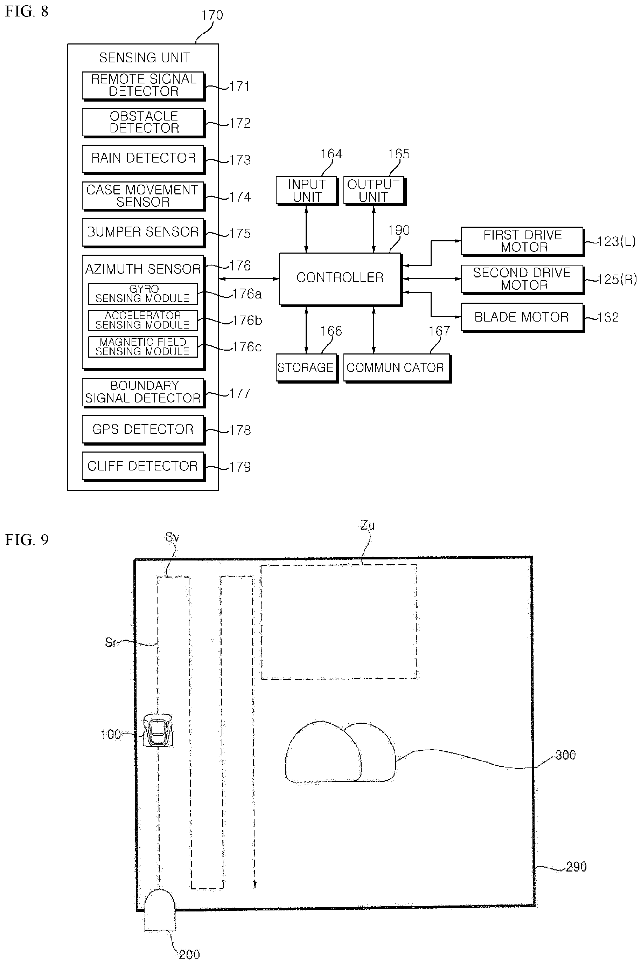

FIG. 8 is a block diagram illustrating a control relationship of the moving robot 100 of FIG. 1.

Referring to FIG. 8, the moving robot 100 may include the input unit 164 capable of inputting various instructions of the user. The input unit 164 may include a button, a dial, and a touch-type display. The input unit 164 may include a microphone (not illustrated) for speech recognition. In the present embodiment, a plurality of buttons are disposed on an upper portion of the case 112.

The moving robot 100 may include the output unit 165 which outputs various information to the user. The output unit 165 may include a display module which outputs visual information. The output unit 165 may include a speaker (not illustrated) which outputs auditory information.

In the present embodiment, the display module 165 outputs an image upward. The display module 165 is disposed on the upper portion of the case 112. As an example, the display module 165 may include a thin film transistor liquid-crystal display (LCD) panel. In addition, the display module 165 may be implemented using various display panels such as a plasma display panel or an organic light emitting diode display panel.

The moving robot 100 includes a storage 166 for storing various information. The storage 166 records various information necessary for the control of the moving robot 100, and may include a volatile or nonvolatile recording medium. The storage 166 may store information input from the input unit 164 or received by a communicator 167. A program for controlling the moving robot 100 may be stored in the storage 166.

The moving robot 100 may include the communicator 167 for communicating with an external device (terminal or the like), a server, a router, or the like. For example, the communicator 167 may be implemented to wirelessly communicate with wireless communication technologies such as IEEE 802.11 WLAN, IEEE 802.15 WPAN, UWB, Wi-Fi, Zigbee, Z-wave, and Blue-Tooth. The communicator may be changed depending on the communication method of another device or a server.

The moving robot 100 includes a sensing unit 170 which senses information related to a state of the moving robot 100 or an environment outside the moving robot 100. The sensing unit 170 may be include at least one of a remote signal detector 171, an obstacle detector 172, a rain detector 173, a case movement sensor 174, a bumper sensor 175, azimuth sensor 176, boundary signal detector 177, a GPS detector 178, and a cliff detector 179.

The remote signal detector 171 receives an external remote signal. When the remote signal is transmitted by an external remote controller, the remote signal detection unit 171 may receive the remote signal. For example, the remote signal may be an infrared signal. The signal received by the remote signal detector 171 may be processed by the controller 190.

A plurality of remote signal detector 171 may be provided. The plurality of remote signal detectors 171 include a first remote signal detection unit 171a disposed on the front portion of the body 110 and a second remote signal detection unit 171b disposed on the rear portion of the body 110. The first remote signal detector 171a receives a remote signal transmitted from the front. The second remote signal detector 171b receives a remote signal transmitted from the rear.

The obstacle detector 172 detects an obstacle around the moving robot 100. The obstacle detector 172 may detect an obstacle in front. A plurality of obstacle detectors 172a, 172b, and 172c may be provided. The obstacle detector 172 is disposed on the front surface of the body 110. The obstacle detector 172 is disposed above the frame 111. The obstacle detector 172 may include an infrared sensor, an ultrasonic sensor, an RF sensor, a geomagnetic sensor, a Position Sensitive Device (PSD) sensor, or the like.

The rain detector 173 detects rain when rain occurs in an environment where the moving robot 100 is placed. The rain detector 173 may be disposed in the case 112.

The case movement sensor 174 detects the movement of the case connector. When the case 112 is raised upward with respect to the frame 111, the case connector moves upward, and the case movement sensor 174 detects that the case 112 is raised. When the case movement sensor 174 detects that the case 112 is raised, the controller 190 may control to stop the operation of the blade 131. For example, when the user raises the case 112 or a situation in which the case 112 is raised by a lower obstacle having a significant size occurs, the case movement sensor 174 may detect this.

The bumper sensor 175 can detect a rotation of the movable fixing portion. For example, a magnet may be disposed on one side of the lower portion of the movable fixing portion, and a sensor which detects a change in the magnetic field of the magnet may be disposed on the frame 111. When the movable fixing portion rotates, the sensor detects the change in the magnetic field of the magnet, and thus, the bumper sensor 175 which detects the rotation of the movable fixing portion can be implemented. When the bumper 112b collides with an external obstacle, the movable fixing portion rotates integrally with the bumper 112b. The bumper sensor 175 may detect the rotation of the movable fixing portion, and thus, detect an impact of the bumper 112b.

The azimuth sensor (AHRS) 176 may have a gyro sensing function. The azimuth sensor 176 may further include an acceleration sensing function. The azimuth sensor 176 may further include a magnetic field sensing function.

The azimuth sensor 176 may include a gyro sensing module 176a which performs gyro sensing. The gyro sensing module 176a may detect the horizontal rotational speed of the body 110. The gyro sensing module 176a may detect a tilting speed with respect to the horizontal surface of the body 110.

The gyro sensing module 176a may include a gyro sensing function for three axes of a spatial coordinate system orthogonal to each other. The information collected by the gyro sensing module 176a may be roll, pitch, and yaw information. The processing module can calculate direction angles of the cleaners 1 and 1' by integrating the angular velocities of rolling, pitching, and yaw.

The azimuth sensor 176 may include an acceleration sensing module 176b which performs acceleration sensing. The acceleration sensing module 176b may have an acceleration sensing function for the three axes of the spatial coordinate system orthogonal to each other. A given processing module can calculate the speed by integrating the acceleration, and can calculate a moving distance by integrating the speed.

The azimuth sensor 176 may include a magnetic field sensing module 176c which performs magnetic field sensing. The magnetic field sensing module 176c may have a magnetic field sensing function for three axes of a spatial coordinate system orthogonal to each other. The magnetic field sensing module 176c may detect the magnetic field of the Earth.

The boundary signal detector 177 detects the boundary signal of the boundary wire 290 or/and the docking position signal of the reference wire 270.

The boundary signal detector 177 may be disposed in the front portion of the body 110. Accordingly, it is possible to detect the boundary of the traveling area early while moving forward, which is a main traveling direction of the moving robot 100. The boundary signal detector 177 may be disposed in an inner space of the bumper 112b.

The boundary signal detector 177 may include a first boundary signal detector 177a and a second boundary signal detector 177b which are spaced apart from side to side. The first boundary signal detector 177a and the second boundary signal detector 177b may be disposed in the front portion of the body 110.

For example, the boundary signal detector 177 includes a magnetic field sensor. The boundary signal detector 177 may be implemented using a coil to detect a change in a magnetic field. The boundary signal detector 177 may detect a magnetic field in at least a horizontal direction. The boundary signal detector 177 may detect a magnetic field with respect to three axes which are orthogonal to each other in space.

Specifically, the first boundary signal detector 177a may detect a magnetic field signal in a direction orthogonal to the second boundary signal detector 177b. The first boundary signal detector 177a and the second boundary signal detector 177b may detect magnetic field signals in directions orthogonal to each other, and combine the detected magnetic field signal values to detect the magnetic field with respect to the three axes orthogonal to each other in the space.

When the boundary signal detector 177 detects the magnetic field with respect to the three axes which are orthogonal to each other in space, the direction of the magnetic field is determined by a sum vector value of the three axes, and if the direction of the magnetic field is close to the horizontal direction, the docking position signal can be recognized, and if the direction of the magnetic field is close to the vertical direction, the boundary signal can be recognized.

Moreover, when a plurality of divided traveling areas are present, the boundary signal detector 177 may distinguish between an adjacent boundary signal and boundary signals of the plurality of traveling areas by a difference in an intensity of the magnetic field, and the boundary signal detector 177 may distinguish the adjacent boundary signal and the docking position signal by a difference in direction of the magnetic field.

In another example, when the plurality of divided traveling areas are present, the boundary signal detector 177 may distinguish the adjacent boundary signal and the boundary signals of the plurality of traveling areas by a difference in distribution of the magnetic field. Specifically, the boundary signal detector 177 may recognize the adjacent boundary signal by detecting the intensity of the magnetic field within a preset distance on plane coordinates having a plurality of peaks.

The GPS detector 178 may be provided to detect a Global Positioning System (GPS) signal. The GPS detector 178 may be implemented using a PCB.

The cliff detection unit 179 detects the presence of a cliff on the traveling surface. The cliff detection unit 179 is disposed in the front portion of the body 110 and can detect the presence or absence of a cliff in front of the moving robot 100.

The sensing unit 170 may include an opening/closing detector (not illustrated) which detects whether at least one of the first opening/closing unit 117 and the second opening/closing unit 118 is opened or closed. The opening/closing detector may be disposed in the case 112.

The moving robot 100 includes the controller 190 which controls autonomous traveling. The controller 190 may process a signal of the sensing unit 170. The controller 190 can process a signal of the input unit 164.

The controller 190 may control the driving of the first driving motor 123(L) and the second driving motor 123(R). The controller 190 may control the driving of the blade motor 132. The controller 190 can control the output of the output unit 165.

The controller 190 includes a main board (not illustrated) disposed in the inner space of the body 110. The main board means a PCB.

The controller 190 may control the autonomous driving of the moving robot 100. The controller 190 may control the driving of the traveler 120 based on the signal received from the input unit 164. The controller 190 may control the driving of the traveler 120 based on the signal received from the sensing unit 170.

In addition, the controller 190 may process the signal of the boundary signal detector 177. Specifically, the controller 190 may determine the current position by analyzing the boundary signal through the boundary signal detector 177 and control the driving of the traveler 120 according to a traveling pattern.

In this case, the controller 190 may control the traveler 120 according to the traveling pattern in the zigzag mode.

Hereinafter, traveling in a zigzag mode according to the control of the controller 190 will be described with reference to FIG. 9.

FIG. 9 is a view illustrating a moving robot 100 system according to an embodiment of the present disclosure.

Referring to FIG. 9, the moving robot 100 system of the present disclosure may include a boundary wire 290 disposed to define one traveling area Zd, and the moving robot 100 traveling inside the traveling area Zd. In addition, the system of the moving robot 100 of the present disclosure may further include a docking device 200 in which the moving robot 100 is docked and charged.

In this case, although FIG. 9 illustrates one traveling area as an example, the present invention is not limited thereto, and a plurality of traveling areas Zd may be formed.

In addition, as illustrated in FIG. 9, an obstacle 300, which is an area which interferes with the pattern traveling by a facility or an arbitrary structure, may exist in one traveling area Zd.

An area where the obstacle 300 is located is defined as an obstacle zone, and the obstacle 300 is not divided by a separate boundary wire.

Whether or not there is the obstacle 300 is detected by the obstacle detector 172, and the obstacle detector 172 may detect the obstacle 300 in front and transmit a detection signal to the controller 190.

The controller 190 may determine whether or there is the obstacle 300 by analyzing detection signals from various sensors from the plurality of obstacle detectors 172a, 172b, and 172c.

For example, as illustrated in FIG. 9, the obstacle may be formed in a polygonal shape, but may be formed in a circular shape.

The controller 190 may perform a pattern traveling mode which travels at a predetermined pattern in one traveling area Zd. A predetermined pattern traveling mode for moving the body 110 along predetermined pattern paths Sr and Sv is preset. The pattern traveling mode includes at least a predetermined algorithm for driving the traveler 120. The pattern traveling mode may include an algorithm for driving the traveler 120 according to a detection signal from the sensing unit 170.

Specifically, in FIG. 9, the moving robot 100 may travel in a zigzag mode with a position where the docking device 200 is disposed within the traveling area Zd as a starting point. That is, the moving robot 100 travels along the major axis Sr backward R at the starting point. In this case, when boundary signals from the boundary wire 290 are received and an edge area is determined, the moving robot rotates in a direction in which a remaining area exists, that is, rotates the right in FIG. 9, and travels along a minor axis Sv.

In this case, a rotation angle may be an angle between 120° and 60°, preferably approximately 90°. In addition, the moving robot can rotate to have a predetermined curvature when rotating right.

Next, when the traveling along the minor axis Sv ends, the moving robot rotates right according to the signal from the boundary wire 291 again and travels along the major axis Sr.

Traveling along the major axis Sr at this time is to move to the front F, and in this way, the moving robot alternately moves the major axis Sr and the minor axis Sv and travels in a zigzag mode in one traveling area Zd to perform the lawn mowing. Accordingly, a plurality of major axes Sr and a plurality of minor axes Sv for traveling in one traveling area may be designed as a target pattern, and the plurality of major axes Sr may be parallel to each other.

In this case, when the moving robot reaches the edge area while performing the lawn mowing in the traveling area Zd in the zigzag mode, if it is determined that there is no longer an area to travel right along the traveling direction according to the boundary signal from the boundary wire 290, the moving robot perform the traveling toward the docking device 200 according to a homing mode, and thus, the traveling is completed.

When one traveling area Zd is formed in this way, lengths of the major axis Sr and the minor axis Sv are set, and the moving robot travels in the zigzag mode along the set major axis Sr and minor axis Sv. The lawn mower robot, which is the moving robot 100, moves according to the pattern traveling mode while rotating the blade 131, and thus, can uniformly mow the lawn in the traveling area Zd.

By performing the traveling in the traveling area Zd in the pattern traveling mode a plurality of times, the lawn mowing can be performed with a length of about 1 to 2 mm for each traveling. Therefore, since the lawn is mowed a plurality of times, it is possible to reduce discomfort of a user caused by a visible difference between the traveling area Zd and the non-traveling area.

In this case, when there is the obstacle in the traveling area as illustrated in FIG. 9, the controller 190 determines whether there is the obstacle 300 and performs the pattern traveling matching with the obstacle 300.

That is, when the moving robot travels in the zigzag mode in the traveling direction of the pattern and encounters the obstacle 300, the controller 190 receives the detection signal from of the obstacle 300 detector 172 and sets the length of the major axis Sr of the pattern path again when it is determined that there is the obstacle 300 according to the detection signal.

Therefore, the controller 300 sets a distance to the obstacle 300 to the major axis Sr, and continuously performs the pattern traveling in the traveling direction of the pattern according to the set new major axis Sr and the previous minor axis Sv.

Hereinafter, a method of controlling the moving robot when there is the obstacle 300 will be described in detail.

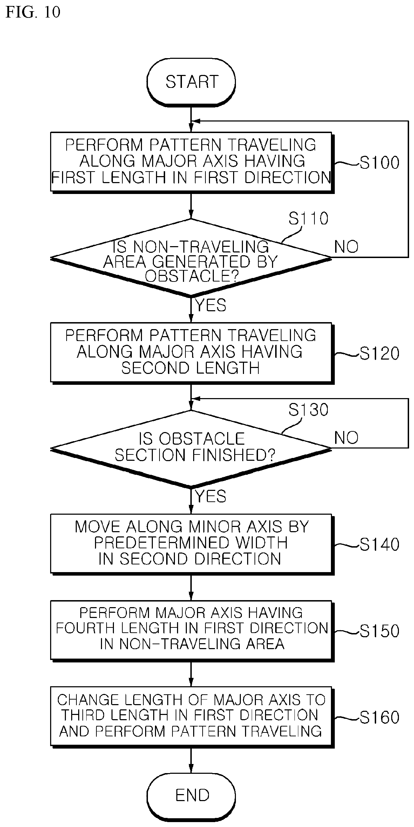

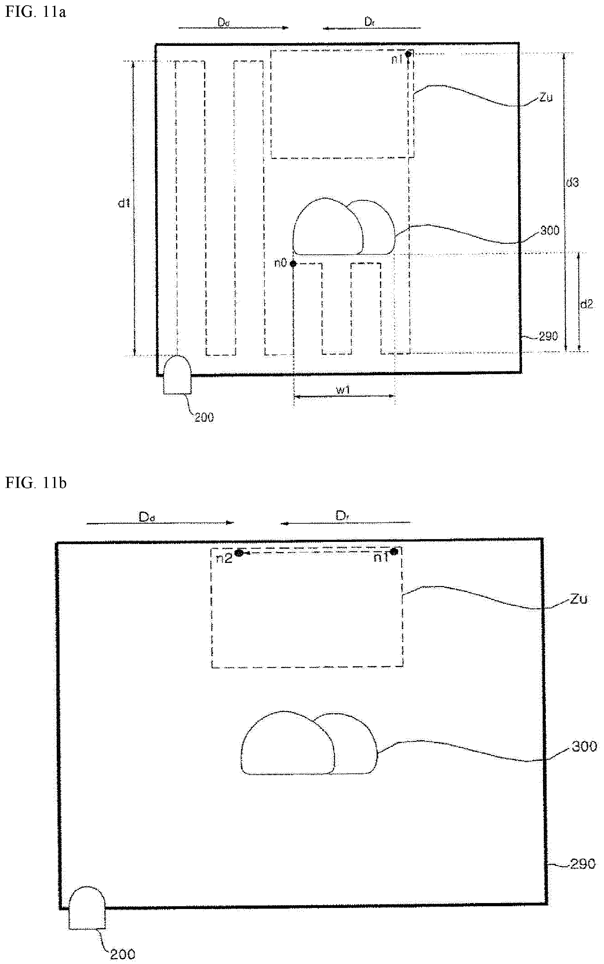

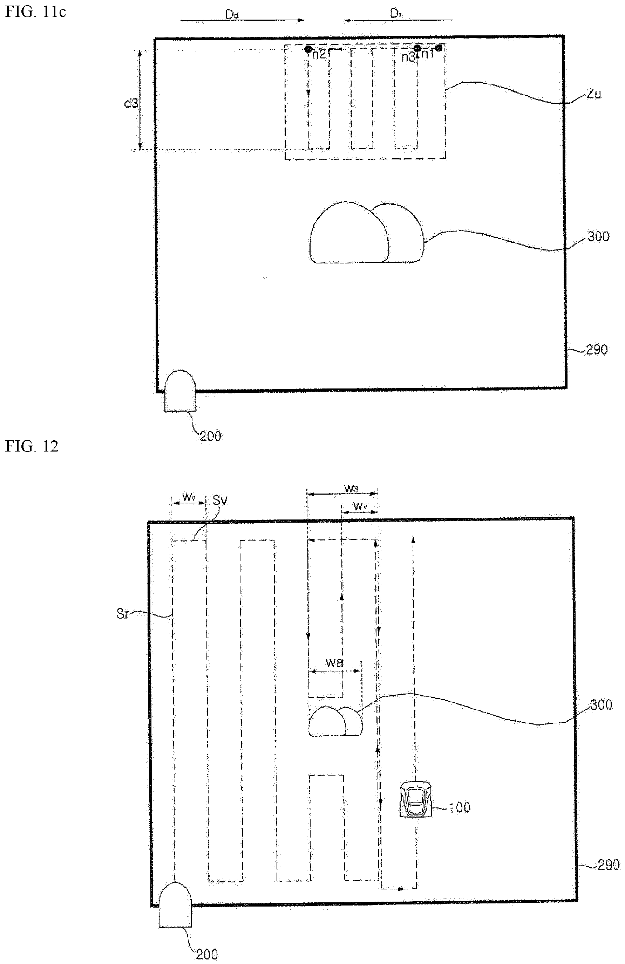

FIG. 10 is a flowchart illustrating one traveling angle control method of the moving robot 100, and FIGS. 11 to 11c are state diagrams illustrating a traveling control according to a first embodiment.

First, when the traveling starts, the controller 190 sets the length of the major axis Sr of the pattern to a first length d1 in a first direction Dd, which is a pattern traveling direction of the traveling area Zd and performs the traveling (S100).

In this case, the length of the minor axis Sv may be fixed to a specific length according to a width and a distance required for rotation of the moving robot 100, or the like, but may be changed according to the setting.

As illustrated in FIG. 11a, the moving robot 100 may encounter the obstacle 300 while performing the pattern traveling under the control of the controller 190.

In this case, the controller 190 receives the boundary signal from the obstacle detector 172 generated by the obstacle 300 and determines whether or not the non-traveling area Zd is generated by the obstacle 300 (S110).

Specifically, as illustrated in FIG. 11a, when the controller 190 receives the detection signal from the obstacle detector 172 at a point no at which the moving robot travels by a second length d2 shorter than the first length d1 while traveling along the major axis Sr by the first length d1, the controller 190 determines that there is the obstacle 300, and thus, change the major axis S4 of the pattern path.

In this case, the controller 190 may enter a ready mode for the occurrence of the non-traveling area Zu due to the obstacle 300.

Next, the controller 190 sets the length of the major axis Sr of the pattern path to the second length d2 and continues the pattern traveling along the first direction Dd which is the pattern traveling direction (S120).

In this case, the controller 190 periodically determines whether or not the obstacle area ends (S130).

The determination of the end of the obstacle area may be determined depending on whether or not the length of the major axis Sr increases again.

That is, when the length of the major axis Sr is longer than the second length d2, it can be determined that the obstacle 300 area ends.

When the length of the major axis Sr is maintained at the second length d2, the pattern traveling continues along the major axis Sr of the set second length d2.

Meanwhile, when the length of the major axis Sr is longer than the second length d2, that is, when the moving robot 100 does not receive the boundary signal even when the moving robot reaches an end of the second length d2, the moving robot 100 moves along the major axis Sr until the moving robot receives the boundary signal and reaches a first end point n1 of the major axis Sr.

When the length of the major axis Sr at the end point n1 of the major axis Sr is defined as a third length d3, in a case where the third length d3 is larger than the second length d2, the controller 190 determines that the obstacle zone ends.

In this case, the controller 190 may calculate a distance in the minor axis direction traveling along the major axis Sr by the second length d2 to calculate a width Wa of the obstacle 300.

The controller 190 determines that the obstacle 300 ends, the moving robot travels the non-traveling area Zu generated by the obstacle 300, that is, performs pattern traveling in a rear area of the obstacle 300.

Specifically, as illustrated in FIG. 11b, the moving robot moves along the minor axis Sv in a second direction Dr which is a direction opposite to the pattern traveling direction at the first point n1 of the major axis Sr and reaches a second end point n2 (S140).

In this case, a distance W2 of the moving robot moving along the minor axis Sv in the second direction Dr is equal to or larger than a length of the minor axis Sv, that is, a sum of a length corresponding to 1/2 period of the pattern path in the minor axis direction and a width Wa of the obstacle 300.

Next, the controller 190 performs the pattern traveling along the major axis Sr in the first direction Dd toward the obstacle 300 from the second end point n2 and reaches an end point n3 of the obstacle 300.

The pattern traveling in the non-traveling area Zu may be performed in a state where the major axis S4 is newly set to a fourth length d4, and the fourth length d4 corresponds to the length of the non-traveling area Zu and may be detected from the detection signal by the obstacle detector 172.

When the controller 190 determines that the moving robot 100 reaches the end point n3 of the obstacle 300, the controller determines that the obstacle area ends, the controller sets the length of the major axis S4 to the third length d3 again along the pattern traveling direction which is the first direction Dd and starts the pattern traveling (S160).

In this way, when the non-traveling area Zu in which the moving robot does not travel due to the obstacle 300 is generated behind the obstacle 300, the moving robot may travel at a distance larger than the width of the obstacle 300 in the opposite direction and perform the pattern traveling on the non-traveling area Zu.

The controller 190 may record a traveling record for the pattern traveling mode in the storage 166 and use the traveling record as raw data at the time of the next traveling of the moving robot 100.

Meanwhile, the controller 190 may control the traveling according to a shape of the obstacle 300 as illustrated in FIG. 12.

FIG. 12 is a flowchart illustrating a traveling control according to another embodiment of the moving robot.

As illustrated in FIG. 12, the obstacle 300 is formed in the traveling area Zd. In this case, the obstacle 300 may have a polygonal shape other than a circular shape, for example, a rectangular shape.

In the case of the obstacle 300 of FIG. 12, the obstacle may have a very small size.

In this, when the obstacle 300 is smaller than the length of 1/2 period of the zigzag pattern in the minor axis direction, the controller 190 may ignore the existence of the obstacle 300. In the obstacle 300 of FIG. 12, the width of the obstacle 300 is smaller than a length of one period of the zigzag pattern in the minor axis direction and is larger than the length of 1/2 period in the minor axis direction.

Accordingly, the moving robot may travel in the opposite direction by the length of one period of the zigzag pattern in the minor axis direction in the second direction Dr along the minor axis in the non-traveling area Zu.

When the moving robot travels in the opposite direction by the length of one period in the minor axis direction, the moving robot may perform the pattern traveling by one period in the first direction Dd in the non-traveling area Zu, and thereafter, set the major axis Sr to the third length d3 again to perform the pattern traveling.

The controller 190 may record the traveling record for the pattern traveling mode in the storage 166 and use the traveling record as raw data at the time of the next traveling of the moving robot 100.

In this way, the moving robot 100 recognizes the existence of the non-traveling area by the obstacle 300 according to the size of the obstacle 300 and continuously performs the traveling of the non-traveling area, and thus, it is possible to perform uniform lawn moving on the entire traveling area.

## Claims

1. A moving robot comprising:
a body which forms an appearance;
a traveler which moves the body;
a boundary signal detector which detects a boundary signal generated in a boundary area of a traveling area; and
a controller which controls the traveler so that the traveler performs pattern traveling in the traveling area, and when there is obstacle in the traveling area, searches for a non-traveling area due to the obstacle and controls the traveler so that the traveler continuously performs traveling of the non-traveling area.

2. The moving robot of claim 1, the controller controls the traveler so that the traveler performs the pattern traveling in a zigzag mode in which the traveler alternately travels a major axis and a minor axis.

3. The moving robot of claim 2, wherein the controller detects existence of the obstacle by receiving a detection signal from an obstacle detector which detects the existence of the obstacle.

4. The moving robot of claim 3, wherein when a length of the major axis is reduced by the obstacle, the controller performs the pattern traveling according to the reduced length of the major axis until the obstacle ends.

5. The moving robot of claim 4, wherein the controller moves to the non-traveling area when the obstacle ends and performs the pattern traveling on the non-traveling area.

6. The moving robot of claim 5, wherein when the obstacle ends, the controller moves along the minor axis by a predetermined distance in a direction opposite to the pattern traveling direction from an end point of the major axis, and reaches an end point of the non-traveling area.

7. The moving robot of claim 6, wherein the controller performs pattern traveling in the non-traveling area in the pattern traveling direction from the end point of the non-traveling area.

8. The moving robot of claim 7, wherein the predetermined distance of the controller moving in the opposite direction is equal to or larger than a sum of a width of the obstacle and a length of the minor axis.

9. The moving robot of claim 8, wherein when the pattern traveling in the non-traveling area is completed, the controller continuously performs pattern traveling on a remaining area of the traveling area.

10. The moving robot of claim 8, wherein when the width of the obstacle is smaller than the length of the minor axis, the controller determines that there is no obstacle.

11. The moving robot of claim 9, wherein the controller detects existence of the obstacle when the length of the major axis is reduced from a first length to a second length.

12. A moving robot system comprising:
a boundary wire which defines a traveling area including an obstacle; and
a moving robot which includes a body which forms an appearance, a traveler which moves the body, a boundary signal detector which detects a boundary signal generated in a boundary area of a traveling area, and a controller which controls the traveler so that the traveler performs pattern traveling in the traveling area, and when there is obstacle in the traveling area, searches for a non-traveling area due to the obstacle and controls the traveler so that the traveler continuously performs traveling of the non-traveling area.

13. The moving robot system of claim 12, the controller controls the traveler so that the traveler performs the pattern traveling in a zigzag mode in which the traveler alternately travels a major axis and a minor axis.

14. The moving robot system of claim 13, wherein when a length of the major axis is reduced by the obstacle, the controller performs the pattern traveling according to the reduced length of the major axis until the obstacle ends, and
the controller moves to the non-traveling area when the obstacle ends and performs the pattern traveling on the non-traveling area.

15. The moving robot system of claim 14, wherein when the obstacle ends, the controller moves along the minor axis by a predetermined distance in a direction opposite to the pattern traveling direction from an end point of the major axis, and reaches an end point of the non-traveling area.

16. The moving robot system of claim 15, wherein the controller performs pattern traveling in the non-traveling area in the pattern traveling direction from the end point of the non-traveling area.

17. The moving robot system of claim 16, further comprising:
a docking device in which the moving robot is docked and charged,
wherein one end of the boundary area is disposed to be adjacent to the docking device.
